# EUROPEAN PATENT SPECIFICATION

(11) **EP 2 970 571 B1**
(45) Date of publication and mention of the grant of the patent: **25.11.2020**
(21) Application number: 14768035.9
(22) Date of filing: 10.03.2014
(51) Int. Cl.: C08G 63/00, C08G 63/46, C08G 63/83, C08G 18/02, C08G 18/46, C08G 18/72, C08K 5/49, C08G 18/76, C08G 63/181, C08G 18/42, C08G 18/40, C08G 18/22, C08G 18/16, C08G 18/09, C08G 63/183, C08G 18/54, C08G 18/18, C08G 18/48, C08G 101/00

(54) **POLYESTER POLYOLS IMPARTING IMPROVED FLAMMABILITY PROPERTIES**
POLYESTERPOLYOLE FÜR BESSERE ENTFLAMMBARKEITSEIGENSCHAFTEN
POLYOLS DE POLYESTER CONFÉRANT DES PROPRIÉTÉS D'INFLAMMABILITÉ AMÉLIORÉES

(30) Priority: 15.03.2013 US 201361792692 P
(43) Date of publication of application: 20.01.2016
(73) Proprietor: Stepan Company, Northfield, Illinois 60093 (US)
(72) Inventor: WOLEK, Sarah, Arlington Height, Illinois 60004 (US); KAPLAN, Warren A., Libertyville, Illinois 60048 (US); SCHREINER, Laura, Palatine, Illinois 60067 (US); YAO, Chunhua, Buffalo Grove, Illinois 60089 (US); NORBERG, David J., Grayslake, Illinois 60030 (US)
(74) Representative: Müller, Christian Stefan Gerd
(86) International application number: PCT/US2014/022573
(87) International publication number: WO 2014/150207

(56) References cited:
- EP-A1- 2 361 940
- US-A1- 2002 013 379
- US-A1- 2003 068 490
- US-A1- 2011 201 716
- US-B1- 6 211 259
- US-B1- 6 359 022

## Description

### BACKGROUND OF THE INVENTION

The present technology relates to polyester polyol compositions for use in polyurethane and polyisocyanurate foams, and in particular relates to polyester polyol compositions that impart improved flammability properties to the polyurethane and polyisocyanurate foams.

Aromatic polyester polyols are widely used in the manufacture of polyurethane and polyisocyanurate foams and resins. Typically, such polyester polyols are produced by esterification of phthalic acid(s) or phthalic acid anhydride with an aliphatic polyhydric alcohol. Useful phthalic acid-based materials include ortho-phthalic acid or anhydride, isophthalic acid, terephthalic acid, polyalkylene terephthalates, especially polyethylene terephthalate (PET), or PET residues or scraps.

Polyester polyols based on terephthalic acid are generally known to have improved flame resistance and low smoke generation properties compared to ortho-phthalic acid-based polyester polyols when incorporated into polyurethane and polyisocyanurate foams. However, a significant drawback of polyester polyols with high terephthalic acid content is their reduced shelf-life stability as demonstrated by a tendency to become cloudy over time. It would be desirable to provide a polyester polyol, based on high terephthalic acid content that can impart improved flammability performance to polyurethane and polyisocyanurate foams, yet also have improved shelf-stability.

US 2011/201716 describes a polyester polyol comprising the esterification product of a) from 10 to 70 mol % of a dicarboxylic acid composition, b) from 2 to 30 mol % of one or more fatty acids and/or fatty acid derivatives and/or benzoic acid, c) from 10 to 70 mol % of one or more aliphatic or cycloaliphatic diols having from 2 to 18 carbon atoms or alkoxylates thereof, d) from 2 to 50 mol % of a higher-functional polyol selected from the group consisting of glycerol, alkoxylated glycerol, trimethylolpropane, alkoxylated trimethylolpropane, pentaerythritol and alkoxylated pentaerythritol.

### BRIEF SUMMARY OF THE INVENTION

In a first aspect, the present technology provides a polyester polyol comprising:
the esterification reaction product of
a. a phthalate-based composition comprising less than 50 mol% of ortho-phthalic acid or ortho-phthalic anhydride; and
b. a hydroxyl-containing composition comprising 20 mol% to 80 mol% of at least one branched aliphatic diol;
   the esterification reaction product being optionally transesterified with at least one hydrophobic material, and optionally blended with at least one non-ionic surfactant,
   wherein the polyester polyol remains clear and homogeneous for a period of at least 6 months when stored at 25°C, which was tested by adding a 0.1 kg (4 oz) sample of the polyester polyol to a clear glass jar, capping it, and leaving it on the shelf, checking daily for the first week and then weekly for signs of haze crystal formation or separation, wherein haze is visible to the naked eye and first appears as 'wisps' or 'clouds' forming in the otherwise clear polyester polyol and the shelf life test ends when the first signs of haze or separation appear.

In a second aspect, the present technology provides a polyester polyol resin blend comprising:
a. at least 40% by weight of the resin blend of a polyester polyol that is the reaction product of
   i. a phthalate-based composition comprising less than 50 mol% of ortho-phthalic acid or ortho-phthalic anhydride; and
   ii. a hydroxyl-containing composition comprising 20 mol% to 80 mol% of at least one branched aliphatic diol;
      optionally transesterified with at least one hydrophobic material, *e.g.,* with from 0 to 5% by weight of the polyester polyol of at least one hydrophobic material; and optionally blended with at least one non-ionic surfactant;
b. at least one blowing agent;
c. optionally, at least one catalyst;
d. optionally, at least one flame retardant;
e. optionally, at least one surfactant; and
f. optionally other foam ingredients (additives, fillers, pigments, *etc.*)*.*

The present technology further provides the polyester polyol according to the first aspect or the polyester polyol resin blend according to the second aspect, wherein the phthalate-based composition comprises at least 50 mol% of one or more of terephthalic acid, isophthalic acid, polyalkylene terephthalate, and dimethyl terephthalate.

The present technology further provides the polyester polyol according to the first aspect or the polyester polyol resin blend according to the second aspect, wherein the at least one branched aliphatic diol is selected from 2-methyl-1,3-propandiol, neopentyl glycol, 2-methyl-2,4-pentandiol, 2-butyl-2-ethyl-1,3-propandiol, 2-ethyl-1,3-hexandiol, 2,4-diethyl-1,5-pentandiol, 1,2-propylene glycol, and dipropylene glycol.

The present technology further provides the polyester polyol according to the first aspect or the polyester polyol resin blend according to the second aspect, wherein the hydrophobic material is selected from caproic, caprylic, capric, lauric, myristic, palmitic, stearic, oleic, linoleic, linolenic, ricinoleic acids, and their methyl esters, and castor, coconut, cochin, corn, cottonseed, linseed, olive, palm, palm kernel, peanut, soybean, sunflower, tall oil, tallow oil, natural oil derivatives and mixtures thereof.

The present technology further provides the polyester polyol resin blend according to the second aspect, wherein the polyester polyol comprises 40-80% by weight of the resin blend.

In a third aspect, the present technology provides a foam forming composition comprising:
a. at least one diisocyanate component, at least one polyisocyanate component, or mixtures thereof, and
b. a polyester polyol that is the esterification reaction product of
   (i) a phthalate-based composition comprising less than 50 mol% of ortho-phthalic acid or ortho-phthalic anhydride; and
   (ii) a hydroxyl-containing composition comprising 20 mol% to 80 mol% of at least one branched aliphatic diol;
      optionally blended with a non-ionic surfactant and optionally transesterified with at least one hydrophobic material;
c. at least one blowing agent;
d. optionally, at least one catalyst;
e. optionally, at least one flame retardant; and
f. optionally at least one additive selected from fillers, pigments and surfactants.

The present technology further provides the foam forming composition according to the third aspect, wherein the flame retardant comprises at least one chlorinated phosphate.

The present technology further provides the foam forming composition according to the third aspect, wherein the flame retardant comprises at least one non-halogenated phosphate.

In a fourth aspect, the present technology provides a foam prepared from the foam forming composition according to the third aspect, wherein the foam formed is a urethane modified polyisocyanurate foam or a polyurethane foam.

### DETAILED DESCRIPTION OF THE INVENTION

The polyester polyol of the present technology comprises the esterification reaction product of (a) a phthalate-based composition comprising less than 50 mol% of ortho-phthalic acid or ortho-phthalic anhydride based on the total content of the phthalate-based composition; and (b) a hydroxyl-containing composition comprising 20 mol% to 80 mol% of at least one branched aliphatic diol, based on the total content of the hydroxyl-containing composition, the esterification reaction product being optionally transesterified with at least one hydrophobic material, wherein the polyester polyol remains clear and homogeneous for a period of at least 6 months when stored at 25°C, which was tested by adding a 0.1 kg (4 oz) sample of the polyester polyol to a clear glass jar, capping it, and leaving it on the shelf, checking daily for the first week and then weekly for signs of haze crystal formation or separation, wherein haze is visible to the naked eye and first appears as 'wisps' or 'clouds' forming in the otherwise clear polyester polyol and the shelf life test ends when the first signs of haze or separation appear; optionally (c) a hydrophobic material and optionally (d) a non-ionic surfactant. The polyester polyols may further be combined with one or more blowing agents, and optionally one or more catalysts and auxiliary components or additives to form a polyol resin composition. The polyol resin composition can be reacted with an isocyanate to produce polyurethane or polyisocyanurate foams.

### Phthalic Acid-Based Material/Phthalate-Based Composition

The polyester polyols of the present technology are prepared from a phthalate-based composition. As used herein, "phthalic acid-based material" or "phthalate-based material" means an aromatic dicarboxylic acid or a derivative thereof. Examples of phthalic acid-based material include, but are not limited to, ortho-phthalic acid, isophthalic acid, terephthalic acid, methyl esters of ortho-phthalic, isophthalic or terephthalic acid, phthalic anhydride, dimethyl terephthalate, polyethylene terephthalate, trimellitic anhydride, and pyromellitic dianhydride. An important aspect of the present technology is that the polyester polyol contains less than 50 mol% of ortho-phthalic acid or ortho-phthalic anhydride, based on the phthalate-based composition present in the polyester polyol. Limiting the ortho-phthalic acid content to less than 50 mol%, for example by limiting the amount of ortho-phthalic acid or ortho-phthalic anhydride used to prepare the polyester polyol, results in a polyester polyol that imparts improved flammability performance characteristics to polyurethane and polyisocyanurate foams. In one embodiment, the ortho-phthalic acid content is no more than 35 mol% of the phthalic acid-based composition. The phthalate-based composition advantageously comprises greater than 50 mol% of iso- and/or terephthalic acid-based content.

### Hydroxyl-Containing Composition

The phthalate-based composition is reacted with a hydroxyl-containing composition to prepare the polyester polyols of the present technology. An important feature of the present technology is that the hydroxyl-containing composition comprises 20 mol% to 80 mol% of at least one non-linear (branched) aliphatic diol. By "non-linear" or "branched" is meant that the aliphatic diol has one or more alkyl groups bonded to one or more alkylene carbons of the aliphatic carbon chain, thereby creating tertiary or quaternary carbon atom(s) within the chain. Thus, for most branched diols contemplated herein, there will be at least one carbon atom that is not a primary or secondary carbon. Dipropylene glycol and 1,2-propylene glycol, although containing only primary and secondary carbons, are nevertheless intended to be included in the contemplated branched aliphatic diols.

It has been found that the incorporation of a branched aliphatic diol into the polyester polyol significantly improves the shelf-life stability of polyester polyols containing less than 50 mol% of ortho-phthalate-containing material. Significant improvement in shelf-life stability is demonstrated by the polyester polyol remaining clear and homogeneous, with no indication of haze or separation, for a period of at least 6 months when stored at room temperature (20-30°C). Examples of suitable branched aliphatic diols include, but are not limited to, neopentyl glycol, 2-methyl-1,3-propandiol, 2-methyl-2,4-pentandiol, 2-butyl-2-ethyl-1,3-propandiol, 2-ethyl-1,3-hexandiol, 2,4-diethyl-1,5-pentandiol,1,2-propylene glycol and dipropylene glycol. Mixtures of branched aliphatic diols can be employed. In one embodiment, the branched aliphatic diol is 2-methyl-1,3-propandiol. The amount of branched aliphatic diol is 20 mol% to 80 mol%, preferably 20 mol% to 50 mol%.

Mixtures of diols can be employed, provided that 20 mol% to 80 mol% of the diol mixture is at least one branched aliphatic diol. Other diols that can be used in combination with the branched aliphatic diols are low molecular weight diols having an average molecular weight of less than about 200. Examples of such diols include ethylene glycol, diethylene glycol, triethylene glycol, 1,3-propane glycol, butylene glycols, 1,2-cyclohexandiol, and polyoxyalkylene polyols derived from the condensation of alkylene oxide.

In addition, the hydroxyl-containing composition can include low molecular weight higher functional polyols. Examples of such polyols include glycerol, 1,1,1-trimethylolpropane, 1,1,1-trimethylolethane, and pentaerythritol.

### Hydrophobic Material

Optionally, the polyester polyols can be transesterified with a hydrophobic material. In some embodiments, the polyester polyol comprises at least 20 mol% of a branched diol which may have a viscosity that is higher than a polyester polyol containing only a linear diol, such as diethylene glycol. Transesterification of the polyester polyol with a hydrophobic material, such as a fatty carboxylic acid or a natural oil, can reduce the viscosity of the polyester polyol.

The term "hydrophobic material" as used herein means a compound or mixture of compounds which contains one or more substantially non-polar organic moieties. The hydrophobic materials are substantially water insoluble and generally contain at least one group capable of being esterified or transesterified, such as a carboxylic acid group, a carboxylic acid ester group, or a hydroxyl group. Generally, the hydrophobic materials used herein are non-phthalic acid derived materials.

The hydrophobic material used in the present technology includes, for example, carboxylic acids (especially fatty acids), lower alkanol esters of carboxylic acids (especially fatty acid methyl esters), fatty acid alkanolamides, and natural oils (*e.g.,* triglycerides (especially fats and oils)) derived from renewable resources. The natural oils may be unmodified (*e.g.,* do not contain a hydroxyl functional group), functionalized (natural oil polyols) or a combination thereof. Suitable natural oils for practice of the present technology include, for example, triglyceride oils, coconut oil, cochin oil, corn oil, cottonseed oil, linseed oil, olive oil, palm oil, palm kernel oil, peanut oil, soybean oil, sunflower oil, tall oils, tallow, lesquerella oil, tung oil, whale oil, tea seed oil, sesame seed oil, safflower oil, rapeseed oil, fish oils, derivatives thereof, and combinations thereof.

Suitable derivatives thereof of natural oils include, but are not limited to, carboxylic acids (*e.g.,* fatty acids), lower alkanol esters (*e.g.,* fatty acid methyl esters) and fatty acid alkanolamides. Examples of fatty acids include, but are not limited to, caproic, caprylic, capric, lauric, myristic, palmitic, stearic, oleic, linoleic, linolenic, ricinoleic, and mixtures thereof. Other suitable acids are dimer acid and 2-ethylhexanoic acid. Examples of fatty acid methyl esters include, but are not limited to, methyl caproate, methyl caprylate, methyl caprate, methyl laurate, methyl myristate, methyl palmitate, methyl oleate, methyl stearate, methyl linoleate, methyl linolenate, and mixtures thereof. Examples of fatty alkanolamides include, but are not limited to, tall oil fatty acid diethanolamide, lauric acid diethanolamide, and oleic acid monoethanolamide.

Examples of alkyl alcohols include decyl, oleyl, cetyl, isodecyl, tridecyl, lauryl alcohols, and mixtures thereof.

Presently preferred types of hydrophobic materials include lower alkylesters of fatty acids, fats, and oils. In some embodiments, the hydrophobic material is soybean oil. The hydrophobic material is present in the polyester polyols in an amount of about 0 to 5 mol%, preferably 0 to 2 mol%.

### Non-Ionic Surfactants

Optionally, the polyester polyols of the present technology can be blended with at least one non-ionic surfactant. Non-ionic surfactants are those compounds that contain one or more hydrophobic moieties and one or more hydrophilic moieties and which have no moieties that dissociate in aqueous solution or dispersion into cations and anions.

The non-ionic surfactant added to the polyester polyol of the present technology can be, for example, a polyoxyalkylene non-ionic surfactant. While nearly any non-ionic surfactant compound can be employed, in general, in the practice of the present technology, it is preferred that the non-ionic surfactant be a polyoxyalkylene surfactant which contains an average of from about 4 to about 240 individual oxyalkylene groups per molecule with the oxyalkylene groups typically being selected from the group consisting of oxyethylene and oxypropylene. Polyoxyalkylene non-ionic surfactants may be based on any starting material which bears groups with hydrogen atoms reactive to alkoxylation. This includes hydroxyl, carboxyl, thiol, and primary and secondary amine groups.

The hydrophobic portion of a non-ionic surfactant is preferably derived from at least one starting compound which is selected from the group consisting of:
(a) alcohols containing from about 4 to 18 carbon atoms each,
(b) fatty amides containing from about 6 to 18 carbon atoms each in the fatty acid moiety,
(c) fatty amines containing from about 6 to 18 carbon atoms each,
(d) fatty acids containing from 6 to 18 carbon atoms each,
(e) phenols and/or alkyl phenols wherein the alkyl group contains from about 4 to 16 carbon atoms each,
(f) fats and oils containing from 6 to about 60 carbon atoms each,
(g) polyoxypropylene glycols containing from 10 to 70 moles of propylene oxide,
(h) polyoxybutylene glycols containing from 10 to 70 moles of butylene oxide, and
(i) mixtures thereof.

In making a non-ionic surfactant, such a starting compound is sufficiently alkoxylated to provide a desired hydrophilic portion. Depending on the alkoxylation reactant proportions used, the starting compound is alkoxylated on average with about 3 to 125 moles of alkylene oxide per mole of starting compound, where the alkoxylation material is preferably selected from the group consisting of ethylene oxide, propylene oxide, and mixtures thereof. Examples of non-ionic surfactants contemplated include, but are not limited to, the reaction product of one mole of Neodol® 45 (a linear C₁₄-C₁₅ alcohol available from Shell Chemical Co.), 14 moles of propylene oxide (PO), and 11 moles of ethylene oxide (EO); the reaction product of one mole of castor oil and 36 moles of EO; the reaction product of one mole of tallowamine and 10 moles of EO; the reaction product of one mole of nonyl phenol and 10 moles of EO; the reaction product of one mole of nonyl phenol, 30 moles of PO, and 30 moles of EO; the reaction product of one mole of tall oil fatty acid and 12 moles of EO; and the reaction product of one mole of lauryl alcohol and 8 moles of EO.

One class of non-ionic surfactants employable in the present technology is characterized by the formula (1):

RO(CH₂CH₂O)ₙH (1)

where:
R is a radical selected from the group consisting of alkyl phenyl radicals, wherein the alkyl group in each such radical contains about four to eighteen carbon atoms, and alkyl radicals each containing from six through twenty carbon atoms, and n is a positive whole number from 3 to 125.

Some of the non-ionic surfactants employable in the practice of the present technology can be characterized by containing block units of ethylene oxide in combination with block units of propylene oxide or butylene oxide. Thus, the hydrophobic part of a molecule may contain recurring butylene oxide or propylene oxide units or mixed units of butylene oxide and propylene oxide. Minor amounts of ethylene oxide may also be present within the blocks of propylene oxide or butylene oxide. Thus, the hydrophobic portion may consist of a polyoxyalkylene block derived from alkylene oxides with at least three carbon atoms, an alkyl, aryl, or alkaryl hydrocarbon group with at least six carbon atoms, as for instance from a fatty alcohol, or a combination of one or more such polyoxyalkylene blocks and one or more such hydrocarbon groups. Typically, the hydrophilic portion of the non-ionic surfactants employed herein is comprised of ethylene oxide units.

The polyester polyols of the present technology advantageously have an average functionality of about 1.8 to about 3.0, preferably 1.8 to about 2.5. The aromatic polyester polyol contains an amount of phthalate-based composition relative to an amount of hydroxyl-containing composition to give an average hydroxyl value of 150 to 500, alternatively 200 to 350, alternatively 220 to 350, and an acid value of 0.05 to about 5.0, alternatively, about 0.25 to about 3.0, alternatively about 0.5 to about 1.5. The polyester polyols of the present technology have a shelf-life stability of at least six months, as demonstrated by a lack of haze and phase separation in the polyester polyol.

### Resin Blends

As outlined above, in the second aspect of the present technology, the polyester polyol of the present technology is incorporated into a polyester polyol resin blend or "B component" which may be reacted with an isocyanate to make a polyurethane or polyisocyanurate foam. The polyester polyol resin blend comprises:
a. at least 40% by weight of the resin blend of a polyester polyol that is the reaction product of
   i. a phthalate-based composition comprising less than 50 mol% of ortho-phthalic acid or ortho-phthalic anhydride; and
   ii. a hydroxyl-containing composition comprising 20 mol% to 80 mol% of at least one branched aliphatic diol
      optionally transesterified with from 0 to 5% by weight of the polyester polyol of at least one hydrophobic material, and optionally blended with a non-ionic surfactant;
b. at least one blowing agent;
c. optionally, at least one catalyst; and
d. optionally, at least one flame retardant.

It has been found that when the resin blend comprises at least 40% by weight of the polyester polyol, the resulting polyurethane foam or polyurethane-modified isocyanurate foam has improved flammability performance characteristics, as demonstrated, for example, by low smoke and low weight loss upon burning conditions, or through less thickness loss and more weight retained in hot plate testing and thermogravity analysis, respectively. Generally, the resin blend can comprise up to about 80% by weight of the polyester polyol.

The resin blend may optionally comprise other polyols in addition to the polyester polyol. Examples of other types of polyols include polyether polyols, thioether polyols, amine-initiated polyether polyols, Mannich polyols, polyester amides, polyacetals, and aliphatic polycarbonates containing hydroxyl groups; polyoxyalkylene polyether polyols, amine terminated polyoxyalkylene polyethers; non-aromatic polyester polyols, graft dispersion polyols, and polyester polyether polyols.

The resin blend also comprises one or more blowing agents, optionally one or more catalysts, and optionally one or more other auxiliary components or additives, including surfactants and/or flame retardants.

Suitable blowing agents for use in the preparation of polyurethane or polyisocyanurate foams are known to those familiar with the technology and include aliphatic or cycloaliphatic C₄-C₇ hydrocarbons, water, mono- and polycarboxylic acids having a molecular weight of from 46 to 300, salts of these acids, and tertiary alcohols, fluorocarbons, chlorofluorocarbons, hydrochlorofluorocarbons, hydrofluorocarbons (HFC's ex. 245fa, 365mcf), halogenated hydrocarbons, hydrohaloolefins (HFO). Suitable blowing agents are further described, for example, in U.S. Patent No. 5,922,779. Also, mixtures and combinations of different blowing agents can be used.

The resin blends of the present invention optionally contain catalysts to accelerate the reaction with the polyisocyanate. Suitable catalysts include but are not limited to salts of organic carboxylic acids, for example sodium salts, ammonium salts, and preferably potassium salts. Examples include trimethyl-2-hydroxypropyl ammonium formate, trimethyl-2-hydroxypropyl ammonium octanoate, potassium formate, potassium 2-ethylhexanoate, and potassium acetate. Tin(II) salts of organic carboxylic acids are often used as catalysts as well, which include, for example, tin(II) acetate, tin(II) octoate, tin(II) ethylhexanoate and tin(II) laurate, and the dialkyltin(IV) salts of organic carboxylic acids, *e.g.,* dibutyltin diacetate, dibutyltin dilaurate, dibutyltin maleate, and dioctyltin diacetate.

The organic metal compounds can be used alone or preferably in combination with strongly basic amines. Tertiary amines are used to promote urethane linkage formation and the reaction of isocyanate with water to generate carbon dioxide. The tertiary amines can also be used alone as a catalyst, particularly in polyurethane foam applications. Tertiary amines include but are not limited to triethylamine, 3-methoxypropyldimethylamine, triethylenediamine, pentamethyldiethylenetriamine, and bis(dimethylaminopropyl)urea, tributylamine; dimethylbenzylamine; N-methylmorpholine; N-ethylmorpholine; N-cyclohexylmorpholine; N,N,N',N'-tetramethylethylenediamine; N,N,N',N'-tetramethylbutanediamine; N,N,N',N'-tetramethylhexane-1,6-diamine; bis(dimethylaminoethyl)ether; dimethylpiperazine; 1,2-dimethylimidazole; 1-azabicyclo[3.3.0]octane and 1,4-diazabicyclo[2.2.2]octane. Additionally, one can use alkanolamine compounds such as triethanolamine; triisopropanolamine; N-methyldiethanolamine and N-ethyldiethanolamine and dimethylethanolamine.

Particularly preferred catalysts include tertiary amine catalysts, potassium 2-ethylhexanoate, available commercially from Air Products and Chemicals under the trade name Dabco K-15 Catalyst; pentamethyldiethylenetramine, available commercially from Air Products and Chemicals under the trade name Polycat 5 Catalyst; and dimethylcyclohexylamine, available commercially from Air Products and Chemicals under the trade name Polycat 8 Catalyst.

Additional suitable catalysts include tris(dialkylaminoalkyl)-s-hexahydrotriazines, in particular tris(N,N-diamethylaminopropyl)-s-hexahydrotriazine; tetraalkylammonium hydroxides such as tetramethylammonium hydroxide; alkali metal hydroxides such as sodium hydroxide and alkali metal alkoxides such as sodium methoxide and potassium isoproproxide and also alkali metal salts of long-chain fatty acids having from 10 to 20 carbon atoms and possibly lateral OH groups in combinations of the organic metal compounds and strongly basic amines.

Catalysts, if employed, are added to the resin blend in an amount of from about 0.05 to 5 weight %, and preferably from about 0.1-2.0 weight %. The amount of catalyst based on the weight of all foaming ingredients is from about 0.5 to about 5 percent by weight, and preferably from about 1 to about 4 percent by weight.

The resin blend compositions can also contain optional additives. For example, the additives can include one more of a cell stabilizing surfactant, flame retardants, pigments, and fillers.

The resin blend of the present technology can be mixed with an isocyanate to produce a polyurethane or polyisocyanurate foam. The isocyanate component is preferably a polyisocyanate, herein defined as having two or more isocyanate functionalities. Examples of these include conventional aliphatic, cycloaliphatic, and preferably aromatic isocyanates. Specific examples include: alkylene diisocyanates with 4 to 12 carbons in the alkylene radical such as 1,12-dodecane diisocyanate, 2-ethyl-1,4-tetramethylene diisocyanate, 2-methyl-1,5-pentamethylene diisocyanate, 1,4-tetramethylene diisocyanate and 1,6-hexamethylene diisocyanate; cycloaliphatic diisocyanates such as 1,3- and 1,4-cyclohexane diisocyanate as well as any mixtures of these isomers, 1-isocyanato-3,3,5-trimethyl-5-isocyanatomethylcyclohexane (isophorone diisocyanate), 2,4- and 2,6-hexahydrotoluene diisocyanate and the corresponding isomeric mixtures, 4,4'-2,2'- and 2,4'-dicyclohexylmethane diisocyanate as well as the corresponding isomeric mixtures and preferably aromatic diisocyanates and polyisocyanates such as 2,4- and 2,6-toluene diisocyanate and the corresponding isomeric mixtures, and 2,2'- diphenylmethane diisocyanate and the corresponding isomeric mixtures, mixtures of 4,4'-, 2,4'-, and 2,2-diphenylmethane diisocyanates and polyphenylene polymethylene polyisocyanates (crude MDI).

In one embodiment, the polyisocyanate component used in conjunction with the resin blend of the present technology is a polymeric diphenylmethane diisocyanate (MDI) having a nominal functionality of approximately 2.7 - 3.0, and an NCO content of approximately 31 weight percent.

Generally, the isocyanate and the resin blend are combined at an isocyanate index of about 90 to about 150, preferably about 100 to about 125, for polyurethane foam and from about 150 to about 400, preferably about 250 to about 350 for polyisocyanurate foam. The polyester polyols of the present technology can be used to make polyurethane and polyisocyanurate foams for both rigid and non-rigid foam uses. For example, they can be used to make polyurethane spray foams, pour-in-place foams, bunstock foams and laminates.

The polyester polyols of the present technology can also be used in polyurethane non-foam applications. For example, the polyester polyols can be used in sealants, elastomers, coatings or adhesive products.

The presently described technology and its advantages will be better understood by reference to the following examples. These examples are provided to describe specific embodiments of the present technology. By providing these specific examples, the inventors do not limit the scope of the present technology.

### Examples

The following components were used in the following examples:
STEPANPOL® PS-2352: PA-DEG polyester polyol available from Stepan Company, with nominal OH value 240 mg KOH/g and nominal functionality of 2.0
STEPANPOL® PS-3024: Terephthalic acid and >/= 50 mol% ortho-phthalic acid based polyol available from Stepan Company with nominal OHV of 315 mg KOH/g and nominal functionality of 2.4 with < 20 mol% branched glycol
Polyether Polyol 1: Mannich Polyol Jeffol® R-425X from Huntsman
Polyether Polyol 2: Sucrose Polyol Multranol® 4030 from Bayer Material Science
Polyol 1: Terephthalic acid and ortho-phthalic-based polyol (<50 mol%) with nominal OHV of 250 mg KOH/g and nominal functionality of 2.0 and > 20 mol% branched diol
Polyol 2: Terephthalic acid-based polyol with nominal OHV of 350 mg KOH/g and nominal functionality of 2.2 and > 20 mol% branched diol
Polyol 3: Isophthalic acid-based polyol with nominal OHV of 250 mg KOH/g and nominal functionality of 2.0 and > 20 mol% branched diol
Polyol 4: Terephthalic acid and ortho-phthalic acid-based polyol (<50 mol%) with nominal OHV of 250 mg KOH/g and nominal functionality of 2.0 and > 20 mol% branched diol
Polyol 5: Polyol blend of polyol 1 and Non-ionic 1, with OHV of 240 mg KOH/g
Polyol 6: Polyol blend of Polyol 1 with Non-ionic 2, with OHV of 240 mg KOH/g
Comparative Example Polyol 1: Terephthalic acid and phthalic acid-based polyol with OHV of 350 mg KOH/g and nominal functionality of 2.4 with no branched diol
Comparative Example Polyol 2: Terephthalic acid and phthalic acid-based polyol with OHV of 315 mg KOH/g and nominal functionality of 2.2
Comparative Example Polyol 3: Terephthalic acid and phthalic acid-based polyol with OHV of 350 mg KOH/g and nominal functionality of 2.2
Non-ionic 1 and 2: Polyalkoxylate material with MW 3000-6000
Polycat® 5: Pentamethyldiethylenetriamine, a catalyst from Air Products and Chemicals, Inc.
Dabco® TMR-3: Quarternary ammonium salt trimerization catalyst from Air Products and Chemicals, Inc.
Curithane ® 52: Amine trimerization catalyst from Air Products and Chemicals, Inc.
Polycat® 8: Dimethylcyclohexylamine, a catalyst from Air Products and Chemicals, Inc.
Dabco® K-15: A solution of potassium 2-ethylhexanoate in diethylene glycol from Air Products and Chemicals, Inc.
Polycat® 46: A solution of potassium acetate in Ethylene glycol from Air Product and Chemicals, Inc
Catalyst blend: The blend of polycat®5, Dabco®K-15 and Polycat®46 at wt% of (7.6/84/8.4)
TEGOSTAB® B-8465: A silicone cell-stabilizing surfactant from Evonik Industries AG
TEGOSTAB® B-8537: A silicone cell-stabilizing surfactant from Evonik Industries AG
Dabco® DC 193: A silicone cell-stabilizing surfactant from Air Products and Chemicals, Inc.
Mondur® M-489: A 3.0-functional polymeric diphenylmethane diisocyanate (PMDI) from Bayer Material Science LLC
Mondur ® MR Light: A 2.7 functional polymer diphenylmethane diisocyanate (PMDI) from Bayer Material Science LLC
Saytex® RB-7980: A blend of Saytex RB-79 flame retardant polyol and a liquid phosphate ester from Albermarle Corporation
Fyrol®PCF: Tris(2-chloroisopropyl) phosphate, a flame retardant produced by Israel Chemicals, Ltd. (ICL)
Fyrol®PNX: Oligomeric ethylene phosphate, a flame retardant produced by Israel Chemical, Ltd (ICL)
Triethyl Phosphate (TEP): A flame retardant obtained from Acros.
N-Pentane: Hydrocarbon blowing agent from Chevron Phillips Chemical Company

### General Procedure For Preparing Polyester Polyols

The phthalate-based composition, and hydroxyl-containing composition are charged to a reactor affixed with mechanical stirring, nitrogen inlet, packed distillation column, condenser with receiver, and temperature control. The temperature is set to 210°C and the starting materials are heated and stirred under nitrogen sparge. The esterification reaction is continued with reflux until the material is clear and homogenous and the distillate rate slows. The Acid Value and OH Value are measured, and heating is continued, with further addition of glycol, if needed, until a desired OH Value is obtained. If used, natural oils or fatty acids are added and transesterified into the reaction mix by continued heating until the reaction is complete. Optionally, non-ionic surfactants can be blended into the reacted product.

Polyester polyols were made by the general procedure outlined above and have the compositions as indicated in Table 1.

| Table 1 | | | | | | | | |
|---|---|---|---|---|---|---|---|---|
| Values are in mol% | Example Polyols | | | | | Comparative Examples | | |
| Polyol Example | 1 | 2 | 3 | 4 | | 1 | 2 | 3 |
| OHV | 250 | 350 | 250 | 250 | | 350 | 315 | 350 |
| Functionality | 2.0 | 2.2 | 2.0 | 2.0 | | 2.4 | 2.2 | 2.2 |
| Acids | | | | | | | | |
| Phthalic Anhydride | 12.6 | | | 12.6 | | 8.7 | 12.4 | 8.1 |
| Terephthalic Acid | 23.5 | 33.7 | | 23.3 | | 26.0 | 23.0 | 24.5 |
| Isophthalic Acid | | | 36.2 | | | | | |
| Glycols (*branched diol) | | | | | | | | |
| Diethylene Glycol | 40.8 | 37.8 | 40.9 | 41.0 | | 51.4 | 58.8 | 58.6 |
| Glycerin | | 7.4 | | | | 13.3 | 5.8 | |
| Trimethylol Propane | | | | | | | | 8.0 |
| 2-Methyl-1,3-Propanediol* | 22.0 | 20.4 | 21.9 | | | | | |
| Neopentyl Glycol* | | | | 22.1 | | | | |
| Fatty Acid Modifier | | | | | | | | |
| Soybean Oil | 1.1 | 0.7 | 0.95 | 1.0 | | 0.59 | | 0.6 |
| Total | 100 | 100 | 100 | 100 | | 100 | 100 | 100 |

The polyester polyols listed in Table 1 were evaluated for shelf life stability. Shelf life stability was tested by adding a 0.1 kg (4 oz) sample of the polyester polyol to a clear glass jar, capping it, and leaving it on the shelf under ambient conditions, (20°C-30°C), checking daily for the first week and then weekly for signs of haze crystal formation or separation. Haze is visible to the naked eye and first appears as 'wisps' or 'clouds' forming in the otherwise clear polyester polyol. The shelf life test ends when the first signs of haze or separation appear. Over time, the polyester polyol will change from being completely clear to completely opaque. The results of the shelf life stability study are shown in Table 2.

**Table 2 - Shelf-Life Stability**

| Polyester Polyol | Branched diol (Mol% Amount) | Appearance |
|---|---|---|
| Example 1 | 22.0 | clear > 9 months |
| Example 2 | 20.4 | clear > 1 year |
| Example 3 | 21.9 | clear > 6 months |
| Example 4 | 22.1 | clear > 6 months |
| Comparative Polyol 1 | 0.0 | haze after 14 weeks |
| Comparative Polyol 2 | 0.0 | haze after 11 weeks |
| Comparative Polyol 3 | 0.0 | haze after 5 months |

From the results in Table 2, it can be seen that when at least 20 mol% of a branched diol was substituted for a linear diol, such as diethylene glycol, in polyester polyols containing at least 50 mol% terephthalic or isophthalic acid, the polyester polyols remained homogeneous and haze free for at least 6 months. In comparison, polyester polyols comprising diethylene glycol with glycerine or trimethylolpropane, and no branched diols, developed haze and were not shelf-stable for at least 6 months.

### Preparation of Foams

The B-side resin blend formulation used to prepare the polyurethane spray foams used in the following examples 5-7 is listed in Table 3:

**Table 3 Formulation**

| | |
|---|---|
| Polyester Polyol | 48.75% |
| Polyether Polyol 1 | 15.00% |
| Polyether Polyol 2 | 10.00% |
| Fyrol PCF | 4.00% |
| Saytex RB7980 | 10.00% |
| Water | 2.50% |
| Dabco DC 193 | 1.10% |
| Polycat 5 | 0.40% |
| Polycat 8 | 0.75% |
| Curithane 52 | 0.50% |
| HFC 245fa | 7.00% |
| Total | 100 |
| Index | 100 |

The B-side resin blends were made by blending each polyester polyol, flame retardant, catalysts, blowing agent, and auxiliary components together according to the formulation in Table 3. Polyurethane foams were produced from the reaction between the B-side resin blend and A-side isocyanate (MR Light, a 2.7- functional pMDI available from Bayer). The resin blend and isocyanate were combined at a ratio calculated from the formulation to give an index of about 100.

### Foam Flammability Tests

To produce foam samples for burn testing, the B-side resin was conditioned to 16°C (60°F) and the A-side isocyanate was conditioned to 25°C, and the A-side and B-side were combined and mixed for 3 seconds. The mixture was immediately poured into a 33 cm x 13 cm x 5.1 cm (13" x 5" x 2") mold, the surfaces of which were coated with mold release and heated to 40°C. The foam was demolded after 5 minutes and allowed to sit for a minimum of 24 hours prior to cutting. Samples were cut to 10 cm x 13 cm x 3.8 cm (4" x 5" x 1.5") for smoke and weight loss testing.

Smoke testing was done with internal equipment developed to measure the amount of smoke produced upon ignition via light obscuration. The amount of smoke generated is quantified and the weight loss of the sample during testing is measured. The results of the smoke testing show that Examples 6-7, made in accordance with the present technology, achieved low smoke generation and weight loss properties compared to Example 5, which used a control polyol with greater than or equal to 50 mol% ortho-phthalic acid. The results of the testing are shown in Table 4.

**Table 4: Flammability Performance of Polyurethane Foam with High Terephthalic Acid Content**

| Example | Polyol | Quantified Smoke Value | % Smoke Improvement over PS-3024 | % Weight Loss | % Improvement in %Weight loss over PS-3024 |
|---|---|---|---|---|---|
| 5 | PS-3024 | 224 | -- | 41 | -- |
| 6 | Example 1 | 123 | 45.1 | 30 | 26.8 |
| 7 | Example 2 | 153 | 31.7 | 30 | 26.8 |

Closed-cell polyurethane-modified polyisocyanurate foams were produced in Examples 8-10, with comparative 4 from reaction between the B-side and the A-side polyisocyanate. B-side resin blends were made by blending each example polyol, flame retardant, surfactant, catalysts and blowing agents *etc.* The resin blend and polyisocyanate, at 20°C, were combined in a paper cup at a ratio calculated from the formulation to give the required index. 300 g total of polyisocyanate and B-side were combined and agitated for 6.5 seconds using a motor-driven mixing blade rotating at 3400 rpm, and the mixture was poured into a tared paper cup with volume of about 5 L for reactivity, density, green strength and compressive strength. Foam molds were made by pouring A and B mixture into a 64 cm x 33 cm x 5.1 cm (25in x 13in x 2in) mold. Hot Plate and Thermogravity analysis (TGA), samples were cut from the panel.

For hot plate testing, a 10 cm x 10 cm x 3.2 cm (4 inches x 4 inches x 1.25 inches) sample was put on a hot plate at a temperature of 648.9°C (1200°F) and kept in place for 15 minutes. During that time, the temperature was gradually cooled from 648.9°C (1200°F) to 537.8°C (1000°F) using a programmed thermal controller. The weight and thickness change of the foam was measured and recorded afterwards. Volume expansion of the foam under thermal stress is preferable, and less weight loss is presumed to indicate a better flammability performance.

TGA Test Procedure: Thermogravimetric analysis was run using a Perkin Elmer Thermogravimetric Analyzer (PYRIS 1 TGA). The foam sample (1.5-3.0 mg) was placed under nitrogen (20 ml/min flow rate) and weighed on and extremely sensitive balance at 100°C. After an additional minute of equilibration the temperature was ramped from 100°C-800°C at a rate of 10°C/min while weight data (expressed as % weight loss) was collected as a function of temperature. Thermogravimetric analysis (TGA) is a widely accepted analytical technique that provides an indication of relative thermal stability for the material under consideration. Thermal stability is expressed as percent retention of foam weight at a particular temperature relative to the foam's initial weight at 100°C. The greater the temperature, the greater the extent of polymer decomposition, and the lower the percent weight retention. Higher weight retention is an indication of better thermal stability which is presumed to indicate better flammability performance.

Foam performances are listed in table 5.

**Table 5: Flammability Performance of Polyurethane-modified Polyisocyanurate Foam with High Terephthalic Acid Content**

| | OHV | Comparative 4 | Example 8 | Example 9 | Example 10 |
|---|---|---|---|---|---|
| Stepanpol ®PS2352 | 240 | 100.00 | | | |
| Polyol 5 | 240 | | 100.00 | | 100 |
| Polyol 6 | 240 | | | 100 | |
| Catalyst blend | 492 | 3.58 | 3.58 | 3.58 | 3.58 |
| Tegostab B 8465 | | 2.00 | 2.00 | 2.00 | 2.00 |
| Water | 6233 | 0.25 | 0.25 | 0.25 | 0.25 |
| Fyrol PCF | | 10.00 | 10.00 | | |
| Triethyl Phosphate (TEP)/ Fyrol PNX Blend | | | | 10.00 | 10.00 |
| n-pentane | | 24.00 | 24.00 | 24.00 | 24.00 |
| Total B | | 139.83 | 139.83 | 139.83 | 139.83 |
| | | | | | |
| Index | | 250 | 250 | 250 | 250 |
| Mondur® M-489 | 135.55 | 165.03 | 165.03 | 165.03 | 165.03 |
| | | | | | |
| Reactivity (s) | | | | | |
| Cream time | | 13 | 13 | 10 | 10 |
| String gel | | 31 | 33 | 27 | 26 |
| Firm Gel | | 39 | 45 | 36 | 34 |
| Tack Free | | 50 | 53 | 41 | 41 |
| Density (PCF) | | 1.62 | 1.64 | 1.68 | 1.70 |
| | | | | | |
| Green strength @ 2 min (kPa (psi)) | | 53.6 (7.77) | 54.5 (7.90) | 64.9 (9.42) | 65.5 (9.50) |
| Compressive strength (kPa (psi)) | | 200.0 (29.00) | 186.9 (27.11) | 197.1 (28.58) | 199.1 (28.87) |
| | | | | | |
| Hot plate thickness change % | | -11.7% | 4.1% | 2.3% | 5.2% |
| | | | | | |
| TGA weight % retention @ 350°C | | 50.6 | 60.2 | 72.6 | 76.7 |
| TGA weight % retention @ 500°C | | 36.9 | 43.6 | 43.3 | 44.8 |

From the data above, it can be seen that polyols 5 and 6, containing greater than 50 mol% terephthalate, improved flammability of the foam, compared to comparative example 4, which used an all ortho-phthalic acid-based polyol. The foam in Examples 8-10, with terephthalate-based polyols, retained more weight in the TGA test, and had less thickness loss in hot plate test.

Closed-cell polyurethane-modified polyisocyanurate foams were produced in Examples 11-13, from the reaction between the B-side and the A-side polyisocyanate. B-side resin blends were made by blending each example polyol, flame retardant, surfactant, catalysts and blowing agents *etc.* The resin blend and polyisocyanate, at 20°C, were combined in a paper cup at a ratio calculated from the formulation to give the required index. 210 g total of polyisocyanate and B-side were combined and agitated for 8 seconds using a motor-driven mixing blade rotating at 3400 rpm, and the mixture was poured into a 64 cm x 33 cm x 5.1 cm (25in x 13in x 2in) mold heated to 55°C. Molds were removed after 15 minutes and cured for 24 hours at 90°C prior to cooling, cutting and testing. Smoke testing was done with internal equipment developed to measure the amount of smoke produced upon ignition via light obscuration. The amount of smoke generated is quantified and the weight loss of the sample during testing is measured. The results of the smoke testing show that Examples 12-13, made in accordance with the present technology, achieved low smoke generation and weight loss properties compared to Example 11, which used a control polyol with greater than or equal to 50 mol% ortho-phthalic acid.

| | Example 11 | Example 12 | Example 13 |
|---|---|---|---|
| PS-2352 | 100 | | |
| Polyol 1 | | 100 | |
| 50/50 weight blend of Polyol 1 and Polyol 2 | | | 100 |
| RB-7980 | 15.0 | 15.0 | 15.0 |
| Water | 0.4 | 0.4 | 0.4 |
| TMR-3 | 2.0 | 2.0 | 2.0 |
| Curithane 52 | 1.5 | 1.5 | 1.5 |
| Polycat 5 | 0.1 | 0.1 | 0.1 |
| B-8537 | 2.0 | 2.0 | 2.0 |
| n-Pentane | 22.0 | 22.0 | 22.0 |
| | | | |
| Total | 143 | 143 | 143 |
| | | | |
| Index | 300 | 300 | 300 |
| Mondur M489 | 250 | 250 | 250 |
| | | | |
| Quantified Smoke Value | | 94 | 108 |
| % Smoke Improvement over PS-2352 | - | | |
| % Weight Loss | | 22 | 22 |
| % Improvement in % Weight Loss over PS-2352 | - | | |

## Claims

1. A polyester polyol comprising:
the esterification reaction product of
a. a phthalate-based composition comprising less than 50 mol% of ortho-phthalic acid or ortho-phthalic anhydride; and
b. a hydroxyl-containing composition comprising 20 mol% to 80 mol% of at least one branched aliphatic diol;
the esterification reaction product being optionally transesterified with at least one hydrophobic material,
wherein the polyester polyol remains clear and homogeneous for a period of at least 6 months when stored at 25°C, which was tested by adding a 0.1 kg (4 oz) sample of the polyester polyol to a clear glass jar, capping it, and leaving it on the shelf, checking daily for the first week and then weekly for signs of haze crystal formation or separation, wherein haze is visible to the naked eye and first appears as 'wisps' or 'clouds' forming in the otherwise clear polyol and the shelf life test ends when the first signs of haze or separation appear.

2. A polyester polyol resin blend comprising:
a. at least 40% by weight of the resin blend of a polyester polyol that is the reaction product of
i. a phthalate-based composition comprising less than 50 mol% of ortho-phthalic acid or ortho-phthalic anhydride; and
ii. a hydroxyl-containing composition comprising 20 mol% to 80 mol% of at least one branched aliphatic diol;
optionally transesterified with from 0 to 5% by weight of the polyester polyol of at least one hydrophobic material, and optionally blended with a non-ionic surfactant;
b. at least one blowing agent;
c. optionally, at least one catalyst; and
d. optionally, at least one flame retardant.

3. The polyester polyol of claim 1 or the polyester polyol resin blend of claim 2, wherein the phthalate-based composition comprises at least 50 mol% of one or more of terephthalic acid, isophthalic acid, polyalkylene terephthalate, and dimethyl terephthalate.

4. The polyester polyol of claims 1 and 3 or the polyester polyol resin blend of claims 2-3, wherein the at least one branched aliphatic diol is selected from 2-methyl-1,3-propandiol, neopentyl glycol, 2-methyl-2,4-pentandiol, 2-butyl-2-ethyl-1,3-propandiol, 2-ethyl-1,3-hexandiol, 2,4-diethyl-1,5-pentandiol, 1,2-propylene glycol, and dipropylene glycol.

5. The polyester polyol of claims 1-3 or the polyester polyol resin blend of claims 2-4, wherein the hydrophobic material is selected from caproic, caprylic, capric, lauric, myristic, palmitic, stearic, oleic, linoleic, linolenic, ricinoleic acids, and their methyl esters, and castor, coconut, cochin, corn, cottonseed, linseed, olive, palm, palm kernel, peanut, soybean, sunflower, tall oil, tallow oil, natural oil derivatives and mixtures thereof.

6. The polyester polyol resin blend of claims 2-5, wherein the polyester polyol comprises 40-80% by weight of the resin blend.

7. A foam forming composition comprising:
a. at least one diisocyanate component, at least one polyisocyanate component, or mixtures thereof, and
b. a polyester polyol that is the esterification reaction product of
(i) a phthalate-based composition comprising less than 50 mol% of ortho-phthalic acid or ortho-phthalic anhydride; and
(ii) a hydroxyl-containing composition comprising 20 mol% to 80 mol% of at least one branched aliphatic diol;
optionally blended with a non-ionic surfactant and optionally transesterified with at least one hydrophobic material;
c. at least one blowing agent;
d. optionally, at least one catalyst;
e. optionally, at least one flame retardant; and
f. optionally at least one additive selected from fillers, pigments and surfactants.

8. The foam forming composition of claim 7, wherein the flame retardant comprises at least one chlorinated phosphate.

9. The foam forming composition of claim 7, wherein the flame retardant comprises at least one non-halogenated phosphate.

10. A foam prepared from the foam forming composition of claims 7-9, wherein the foam formed is a urethane modified polyisocyanurate foam or a polyurethane foam.

## Patentansprüche

1. Polyesterpolyol, umfassend:
das Veresterungsreaktionsprodukt von
a. einer auf Phthalat basierenden Zusammensetzung, die weniger als 50 mol% ortho-Phthalsäure oder ortho-Phthalsäureanhydrid umfasst; und
b. einer hydroxylhaltigen Zusammensetzung, die 20 mol% bis 80 mol% mindestens eines verzweigten, aliphatischen Diols umfasst;
wobei das Veresterungsreaktionsprodukt optional mit mindestens einem hydrophoben Material umgeestert ist,
wobei das Polyesterpolyol klar und homogen für eine Zeitspanne von mindestens 6 Monaten bei einer Lagerung bei 25°C verbleibt, was dadurch getestet wurde, dass eine Probe von 0,1 kg (4 oz) des Polyesterpolyols in ein klares Glasgefäß gegeben wurde, es mit einem Deckel versehen wurde und es auf dem Regal belassen wurde, wobei es täglich für die erste Woche und dann wöchentlich auf Anzeichen einer Trübungskristallausbildung oder Separation überprüft wurde, wobei Trübung für das unbewaffnete Auge sichtbar ist und erst als 'Streifen' oder 'Wolken', die sich in dem ansonsten klaren Polyol ausbilden, erscheint und der Haltbarkeitstest endet, wenn die ersten Anzeichen einer Trübung oder Separation erscheinen.

2. Polyesterpolyol-Harzgemisch, umfassend:
a. mindestens 40% nach Gewicht des Harzgemisches eines Polyesterpolyols, das das Reaktionsprodukt von
i. einer auf Phthalat basierenden Zusammensetzung, die weniger als 50 mol% ortho-Phthalsäure oder ortho-Phthalsäureanhydrid umfasst; und
ii. einer hydroxylhaltigen Zusammensetzung, die 20 mol% bis 80 mol% mindestens eines verzweigten, aliphatischen Diols umfasst;
ist, wobei es optional mit 0 bis 5% nach Gewicht des Polyesterpolyols mindestens eines hydrophoben Materials umgeestert ist und optional mit einem nicht-ionischen Tensid vermischt ist;
b. mindestens ein Treibmittel;
c. optional mindestens einen Katalysator; und
d. optional mindestens ein Flammschutzmittel.

3. Polyesterpolyol nach Anspruch 1 oder Polyesterpolyol-Harzgemisch nach Anspruch 2, wobei die auf Phthalat basierende Zusammensetzung mindestens 50 mol% eines oder mehrerer aus Terephthalsäure, Isophthalsäure, Polyalkylenterephthalat und Dimethylterephthalat umfasst.

4. Polyesterpolyol nach den Ansprüchen 1 und 3 oder Polyesterpolyol-Harzgemisch nach den Ansprüchen 2-3, wobei das mindestens eine verzweigte, aliphatische Diol aus 2-Methyl-1,3-propandiol, Neopentylglykol, 2-Methyl-2,4-pentandiol, 2-Butyl-2-ethyl-1,3-propandiol, 2-Ethyl-1,3-hexandiol, 2,4-Diethyl-1,5-pentandiol, 1,2-Propylenglykol und Dipropylenglykol ausgewählt ist.

5. Polyesterpolyol nach den Ansprüchen 1-3 oder Polyesterpolyol-Harzgemisch nach den Ansprüchen 2-4, wobei das hydrophobe Material aus Capron-, Capryl-, Caprin-, Laurin-, Myristin-, Palmitin-, Stearin-, Öl-, Linol-, Linolen-, Ricinolsäuren und ihren Methylestern, und Rizinus-, Kokosnuss-, Cochin-, Mais-, Baumwollsamen-, Leinsamen-, Oliven-, Palm-, Palmkern-, Erdnuss-, Sojabohnen-, Sonnenblumen-, Tallöl, Talgöl, Derivaten von natürlichem Öl und Gemischen davon ausgewählt ist.

6. Polyesterpolyol-Harzgemisch nach den Ansprüchen 2-5, wobei das Polyesterpolyol 40-80% nach Gewicht des Harzgemisches umfasst.

7. Schaumstoffbildende Zusammensetzung, umfassend:
a. mindestens eine Diisocyanat-Komponente, mindestens eine Polyisocyanat-Komponente oder Gemische davon und
b. ein Polyesterpolyol, das das Veresterungsreaktionsprodukt von
(i) einer auf Phthalat basierenden Zusammensetzung, die weniger als 50 mol% ortho-Phthalsäure oder ortho-Phthalsäureanhydrid umfasst; und
(ii) einer hydroxylhaltigen Zusammensetzung, die 20 mol% bis 80 mol% mindestens eines verzweigten, aliphatischen Diols umfasst;
ist, wobei es optional mit einem nicht-ionischen Tensid vermischt ist und es optional mit mindestens einem hydrophoben Material umgeestert ist;
c. mindestens ein Treibmittel;
d. optional mindestens einen Katalysator;
e. optional mindestens ein Flammschutzmittel; und
f. optional mindestens ein Additiv, ausgewählt aus Füllstoffen, Pigmenten und Tensiden.

8. Schaumstoffbildende Zusammensetzung nach Anspruch 7, wobei das Flammschutzmittel mindestens ein chloriertes Phosphat umfasst.

9. Schaumstoffbildende Zusammensetzung nach Anspruch 7, wobei das Flammschutzmittel mindestens ein nicht-halogeniertes Phosphat umfasst.

10. Schaumstoff, hergestellt aus der schaumstoffbildende Zusammensetzung nach den Ansprüchen 7-9, wobei der gebildete Schaumstoff ein urethanmodifizierter Polyisocyanurat-Schaumstoff oder ein Polyurethan-Schaumstoff ist.

## Revendications

1. Polyester polyol comprenant :
le produit de la réaction d'estérification de
a. une composition à base de phtalate comprenant moins de 50 % en moles d'acide ortho-phtalique ou d'anhydride ortho-phtalique ; et
b. une composition hydroxylée comprenant 20 % en moles à 80 % en moles d'au moins un diol aliphatique ramifié ;
le produit de la réaction d'estérification étant éventuellement trans-estérifié avec au moins un matériau hydrophobe,
lequel polyester polyol reste transparent et homogène pendant une période d'au moins 6 mois quand il est stocké à 25°C, testé par addition d'un échantillon de 0,1 kg (4 onces) du polyester polyol dans un flacon en verre transparent, fermeture de celui-ci, et pose de celui-ci sur une étagère, vérification quotidienne pendant la première semaine, puis chaque semaine, de signes d'une formation de cristaux de voile ou d'une séparation, lequel voile est visible à l'œil nu et apparaît en premier sous la forme de "volutes" ou de "nuages" se formant dans le polyol par ailleurs transparent, et le test de durée de conservation se termine quand les premiers signes de voile ou de séparation apparaissent.

2. Mélange de résine de polyester polyol comprenant :
a. au moins 40 % en poids du mélange de résine d'un polyester polyol qui est le produit de la réaction de
i. une composition à base de phtalate comprenant moins de 50 % en moles d'acide ortho-phtalique ou d'anhydride ortho-phtalique ; et
ii. une composition hydroxylée comprenant 20 % en moles à 80 % en moles d'au moins un diol aliphatique ramifié ;
éventuellement trans-estérifié avec 0 à 5 % en poids du polyester polyol d'au moins un matériau hydrophobe, et éventuellement mélangé avec un tensioactif non-ionique ;
b. au moins un agent gonflant ;
c. éventuellement au moins un catalyseur ; et
d. éventuellement au moins un agent ignifugeant.

3. Polyester polyol selon la revendication 1 ou mélange de résine de polyester polyol selon la revendication 2, dans lequel la composition à base de phtalate comprend au moins 50 % en moles d'un ou plusieurs parmi l'acide téréphtalique, l'acide isophtalique, un poly(téréphtalate d'alkylène), et le téréphtalate de diméthyle.

4. Polyester polyol selon les revendications 1 et 3 ou mélange de résine de polyester polyol selon les revendications 2 et 3, dans lequel l'au moins un diol aliphatique ramifié est choisi parmi le 2-méthyl-1,3-propanediol, le néopentylglycol, le 2-méthyl-2,4-pentanediol, le 2-butyl-2-éthyl-1,3-propanediol, le 2-éthyl-1,3-hexanediol, le 2,4-diéthyl-1,5-pentanediol, le 1,2-propylèneglycol, et le dipropylèneglycol.

5. Polyester polyol selon les revendications 1 à 3 ou mélange de résine de polyester polyol selon les revendications 2 à 4, dans lequel le matériau hydrophobe est choisi parmi les acides caproïque, caprylique, caprique, laurique, myristique, palmitique, stéarique, oléique, linoléique, linolénique, ricinoléique, et leurs esters méthyliques, ainsi que les dérivés de ricin, coprah, cochin, maïs, graines de coton, graines de lin, olive, palme, palmiste, arachide, soja, tournesol, tallol, huile de suif, huile naturelle, ainsi que leurs mélanges.

6. Mélange de résine de polyester polyol selon les revendications 2 à 5, dans lequel le polyester polyol représente 40 à 80 % en poids du mélange de résine.

7. Composition formant une mousse comprenant :
a. au moins un composant diisocyanate, au moins un composant polyisocyanate, ou leurs mélanges, et
b. un polyester polyol qui est le produit de la réaction d'estérification de
(i) une composition à base de phtalate comprenant moins de 50 % en moles d'acide ortho-phtalique ou d'anhydride ortho-phtalique ; et
(ii) une composition hydroxylée comprenant 20 % en moles à 80 % en moles d'au moins un diol aliphatique ramifié ;
éventuellement mélangé avec un tensioactif non-ionique et éventuellement trans-estérifié avec au moins un matériau hydrophobe ;
c. au moins un agent gonflant ;
d. éventuellement au moins un catalyseur ;
e. éventuellement au moins un agent ignifugeant ; et
f. éventuellement au moins un additif choisi parmi les charges, les pigments et les tensioactifs.

8. Composition formant une mousse selon la revendication 7, dans laquelle l'agent ignifugeant comprend au moins un phosphate chloré.

9. Composition formant une mousse selon la revendication 7, dans laquelle l'agent ignifugeant comprend au moins un phosphate non halogéné.

10. Mousse préparée à partir de la composition formant une mousse des revendications 7 à 9, laquelle mousse formée est une mousse de polyisocyanurate modifié par un uréthane ou une mousse de polyuréthane.
